(19) **Europäisches Patentamt**
**European Patent Office**
**Office européen des brevets**

(11) **EP 3 107 287 A1**

(12) **EUROPEAN PATENT APPLICATION**

(43) Date of publication:
**21.12.2016 Bulletin 2016/51**

(51) Int Cl.:
**H04N 13/00** (2006.01)  **H04N 9/74** (2006.01)
**H04N 1/60** (2006.01)

(21) Application number: **15305919.1**

(22) Date of filing: **15.06.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• **DRAZIC, Valter**
**35576 Cesson-Sévigné (FR)**
• **BOREL, Thierry**
**35576 Cesson-Sévigné (FR)**
• **JOLLY, Emmanuel**
**35576 Cesson-Sévigné (FR)**

(74) Representative: **Huchet, Anne et al**
**TECHNICOLOR**
**1-5, rue Jeanne d'Arc**
**92130 Issy-les-Moulineaux (FR)**

(54) **METHODS, SYSTEMS AND APPARATUS FOR LOCAL AND AUTOMATIC COLOR CORRECTION**

(57) The present principles provide for a color processing system. The color processing system includes an image processor configured to color correct a first image sequence based on a second image sequence. The image processor determines a first spatio-temporal picture for a first block of the first image sequence and a second spatio-temporal picture for a second block of the second image sequence. The first block of the first image sequence corresponds in location, disparity and geometry to the second block of the second image sequence. The image processor determines a transform based on color look grabbing of the first spatiotemporal picture and the second spatio-temporal picture. The image processor color corrects the first image sequence by applying the transform to the first block of the first image sequence.

Figure 2

EP 3 107 287 A1

**Description**

**TECHNICAL FIELD**

The present disclosure relates to altering or enhancing presentation of visual media. In particular, the present disclosure relates to color synchronization.

**BACKGROUND**

Color correction, color grading, or color timing (collectively referred to as color correction), is the process of altering or enhancing the color of 2D or 3D, still or video image(s). Color correction is utilized by many computer or machine-based applications, such as websites, motion pictures, commercials or broadcasts, to correct the color of 2D or 3D stereo content. For example, color correction may be used as part of motion picture digital intermediaries ("DI") processes, such as, for example when a director of photography seeks to artistically tweak the colors of a two dimensional ("2D") image. Color correction may be also used during stereoscopic three-dimensional ("3D") DI processes, such as, for example to alter the color in left and right image pair views in order to avoid viewer fatigue by ensuring that the left and right views have the same color appearance. In another example, color correction may be used during filmmaking processes to adjust raw colors of Dailies into preview colors for displaying the Dailies on various devices. In another example, color correction may be used during filmmaking processes to transform low-resolution proxy versions of original raw content from a Telecine workflow into device preview colors with elements of artistic intent.

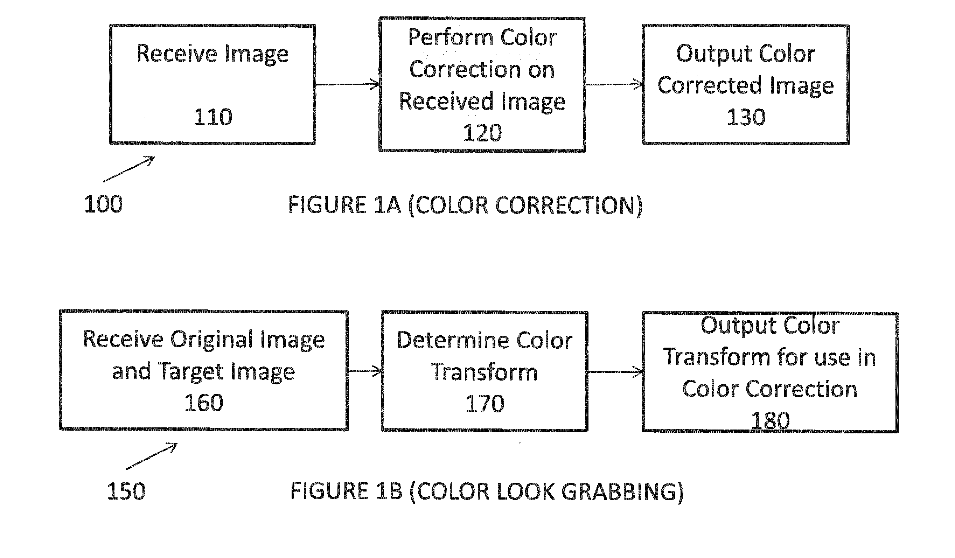

Fig. 1A illustrates a method 100 for color correction of an image. An image may be received at block 110. Block 120 may perform color correction on the received, "original" images. To perform color correction, a color transform is applied to the original image. The image resulting from the color transformation may be known as the "target" image. That is, the target image is derived by transforming the color look of the original image. This target image may provide the desired look for an artist or an owner of the image or film. Block 130 may then output this color corrected, target image.

Fig. 1B illustrates a method 150 for color look grabbing which may also be described as inverse color correction. The color look grabbing process reconstructs an unknown color transform from an original input image and a target image corresponding with a color corrected original image. Block 160 may receive an original and a target image. Block 170 may then determine a color transform based on the received original and target images. The reconstructed color transform may then be outputted at block 180. This outputted color transform may be used to transform the original image into the target image with the lowest possible color error.

Below are some examples of 2D applications of color look grabbing processes:

- An artistic color decision may be obtained by reverse engineering an early DI color grading. For example, color decisions from an early color grade trial in a first DI workflow may be transferred to a second Visual Effects ("VFX") workflow prior to final color grading in order to fine tune the rendering of the colors.
- A built-in color correction may carry out by reverse engineering a still camera image into an artistic color decision. For example, stop motion productions may keep the client's look by applying the look of the compressed output image of a digital stills camera to an uncompressed raw camera image.
- The VFX for dailies may use reverse engineering of color differences in any similar images. For example colors from a Telecine rush (HD film scan) may be transferred into 2K film scan images used in VFX workflow. VFX can then be transferred back to Telecine workflow for editing.
- On-set color decisions may require reverse engineering color differences in very similar images. For example, the client's on-set color decisions may need to be transferred from a Telecine workflow to a DI workflow in order to provide an initial look. The video look may then be used for DI grading.
- Digital asset creation may be carried out by reverse engineering color differences in nearby multi-view images. For example, in order to generate textures for VFX objects, still images are captured on-set. The look of the captured images may then be adapted to the 2K film scan images in order to be used for VFX creation.
- Texture & light information may be extracted by reverse engineering color differences in multi-view images. For example, images from calibration objects may be used to capture texture and lighting on set. The colors of the still images may need to be transformed into the colors of 2K scan images in order to be used for VFX creation.

Several issues exist when images or image sequences are exchanged between devices. For example, color issues may arise when an image generated by a first device or workflow needs to be compared or merged into a second workflow or device. Another color issue may arise when devices or workflows do not use the same color space. In this scenario, variations of colors appear on a given scene, which needs to be made consistent before merging. Color variations may also arise when various devices have not been perfectly calibrated in the same way. Likewise, color decisions (e.g., decisions that result from color grading of an image or image sequence from a first device or workflow) or inherent original colors from the image or the image sequence from the first device or workflow may need to be applied to the images or image sequences of a second device or workflow. Such color differences are problematic because the color look consistency (or artistic intent of the Director of Photography) between both sequences may not be respected, which is not acceptable for the film owner.

## BRIEF SUMMARY OF THE DRAWINGS

The features and advantages of the present principles may be apparent from the detailed description below when taken in conjunction with the Figures described below:

Figure 1A illustrates a flow diagram of a method for color correction.
Figure 1B illustrates a flow diagram for a method for color look grabbing.
Figure 2 illustrates a flow diagram illustrating an exemplary method for color correction of 2D image sequences using color look grabbing in accordance with present principles.
Figure 2A illustrates an exemplary first image sequence and an exemplary second image sequence.
Figure 2B illustrates an exemplary first image sequence and an exemplary second image sequence where each image in each image sequence is divided into blocks.
Figure 2C illustrates two horizontal luminance profiles, a first horizontal luminance profile of a first image sequence and a second horizontal luminance profile of a second image sequence.
Figure 2D illustrates an exemplary method for creating spatio-temporal pictures in accordance with present principles.
Figure 2E illustrates an exemplary spatio-temporal picture created from image blocks from key frames from a first image sequence.
Figure 2F illustrates an exemplary LUT, a first spatio-temporal picture for a given block from a first image sequence and a second spatio-temporal picture for a block in the same position as the given block in a second image sequence.
Figure 3 illustrates a diagram of an exemplary method for performing a blending or feathering effect between LUTs of adjacent blocks in accordance with present principles.
Figure 4 illustrates a flow diagram for an exemplary method for color correcting 3D stereo or multi-view image sequences using color look grabbing in accordance with present principles.
Figure 5 illustrates an exemplary method for color correcting image sub-sequences in accordance with present principles.
Figure 6A illustrates an example of a first image sequence and its subsequences and a second image sequence and its subsequences.
Figure 6B illustrates an example of temporally blending LUT between adjacent sub-sequences.
Figure 7 illustrates a color processing system in accordance with present principles.
Figure 8 illustrates a device in accordance with present principles.

## SUMMARY

An aspect of present principles is directed to a color processing system comprising: an image processor configured to color correct a first image sequence based on a second image sequence; wherein the image processor determines a first spatio-temporal picture for a first block of the first image sequence and a second spatio-temporal picture for a second block of the second image sequence; wherein the first block of the first image sequence corresponds in location, disparity and geometry to the second block of the second image sequence; wherein the image processor determines a transform based on color look grabbing of the first spatio-temporal picture and the second spatio-temporal picture; and wherein the image processor color corrects the first image sequence by applying the transform to the first block of the first image sequence.

An aspect of present principles is further directed to a method comprising: determining, by an image processor, a first spatio-temporal picture for a first block of the first image sequence and a second spatio-temporal picture for a second block of the second image sequence; determining, by the image processor, a transform based on color look grabbing of the first spatio-temporal picture and the second spatio-temporal picture; and color correcting, by the image processor, the first image sequence by applying the transform to the first block of the first image sequence; wherein the first block of the first image sequence corresponds in location, disparity and geometry to the second block of the second image sequence.

An aspect of present principles is directed to the method or system, wherein the image processor is configured to determine whether to determine a first spatio-temporal picture and a second spatio-temporal picture based on the color skew between the first image sequence and the second image sequence.

An aspect of present principles is directed to the method or system, wherein the size of the first block and the size of the second block are determined based on a value of a color skew analysis between the first image sequence and the second image sequence, wherein the first spatio-temporal picture is built based on a first plurality key frames of the first images sequence and the second spatio-temporal picture is built based on a second plurality of key frames of the second images sequence.

An aspect of present principles is directed to the method or system, wherein the number of key frames is equal to N x M blocks, where N is the amount of blocks in the horizontal direction and M is the amount of blocks in the vertical direction of a frame of the first image sequence.

An aspect of present principles is directed to the method or system, further comprising a blending module for blending the border of a transformed image block that is determined by applying the transform to the first block of the first image sequence.

An aspect of present principles is directed to the method or system, further comprising determining a first plurality of sub-sequences for the first image sequence and determining a second plurality of sub-sequences for the second image sequence; and performing color correction for a first sub-sequence of the first image sequence based on a second sub-sequence of the second image sequence.

An aspect of present principles is directed to the method or system, further comprising blending between a color corrected first sub-sequence of the first image sequence and a color corrected second sub-sequence of the first image sequence.

An aspect of present principles is directed to the method or system, wherein the first image sequence corresponds to a left view of 3D image sequence and the second image sequence corresponds to a right view of the 3D image sequence.

An aspect of present principles is directed to the method or system, further comprising determining a disparity map between the first and second image sequences, determining a confidence map based on the disparity map, projecting the first image sequence based on the disparity map to determine a newly projected image sequence, determining a modified newly projected image sequence based on the confidence map, and performing color correction on the modified newly projected image sequence based on the second image sequence, and applying the performed color correction to the first image sequence.

An aspect of present principles is directed to the method or system, wherein the modified newly projected image sequence has pixels blacked out based on the confidence map.

## DETAILED DESCRIPTION

An aspect of present principles may be implemented on any electronic device or combination of electronic devices. For example, the present invention may be implemented on any of variety of devices including a computer, a laptop, a smartphone, a handheld computing system, a remote server, a professional color grading workstation, cloud services and/or on any other type of dedicated hardware. Various examples of the present invention are described below with reference to the figures.

### Exemplary Process of Correcting Color Differences in 2D Image Sequences

In a first example, an aspect of present principles relates to determining and applying localized 2D color transforms using color look grabbing.

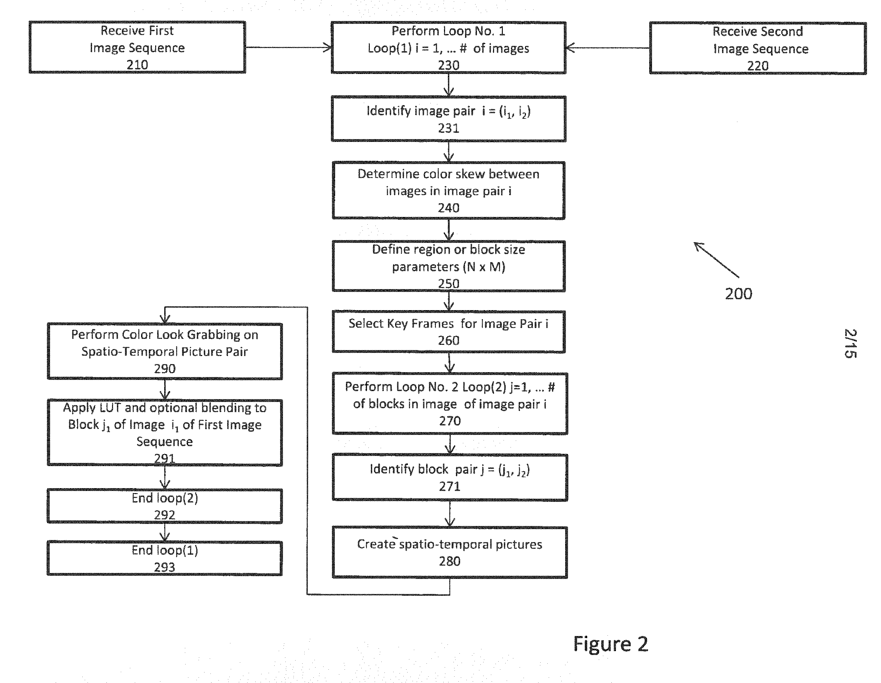

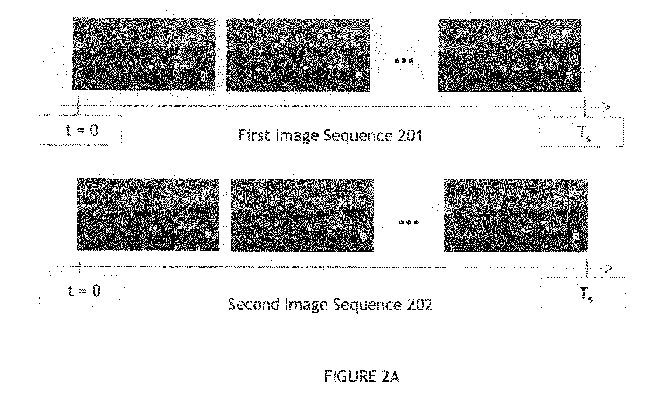

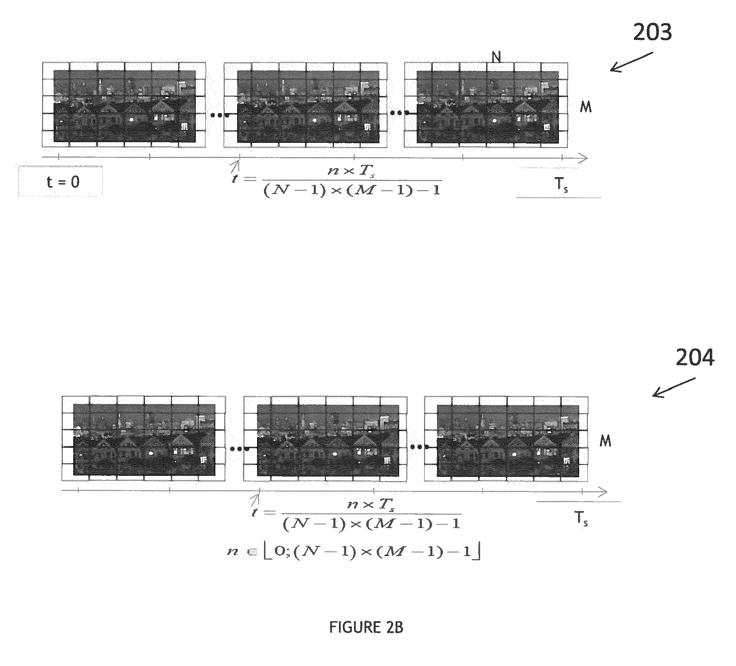

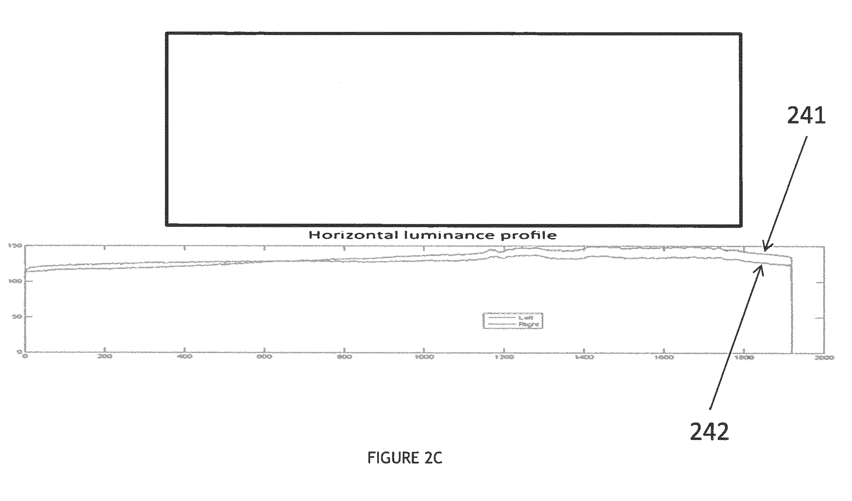

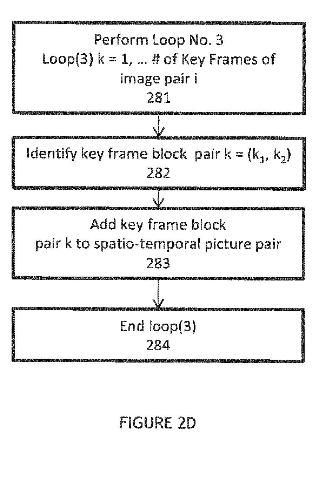

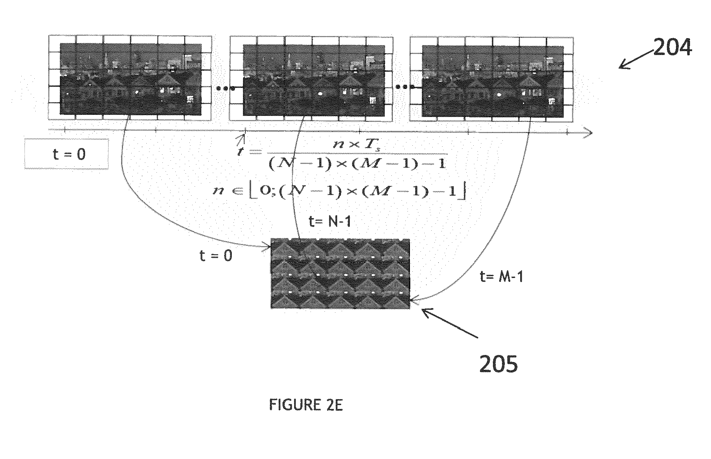

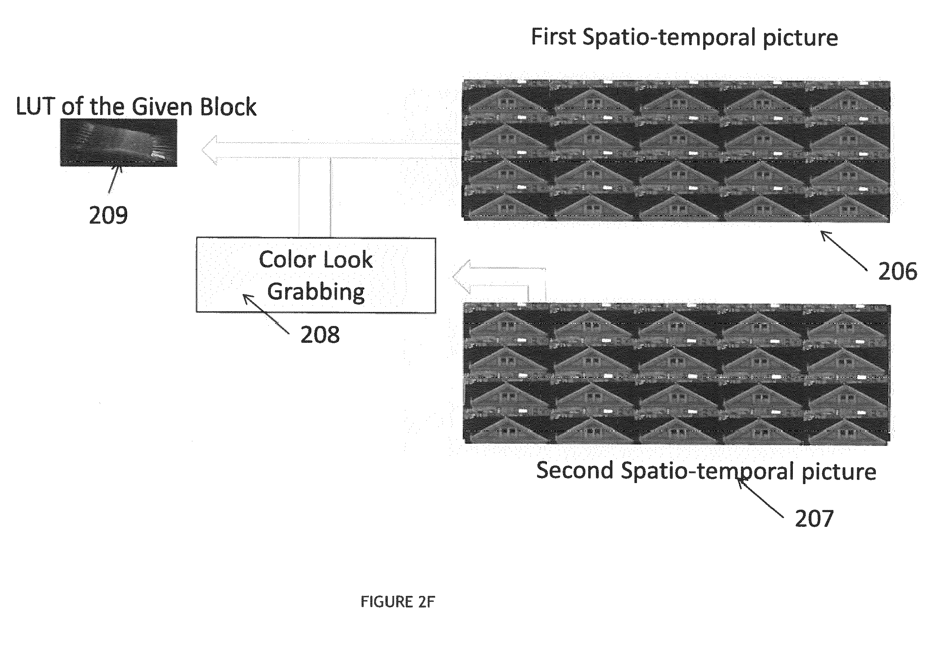

Fig. 2 is a flow diagram illustrating an exemplary method 200 for color correction of 2D image sequences using color look grabbing in accordance with present principles. The method 200 may receive a first image sequence at block 210. The method 200 may receive a second image sequence at block 220. An image sequence may be a succession of images or frames at a given refresh rate (e.g., 24 frames per second). A movie may be composed of a succession of such image sequences. The first and second image sequences may be any image sequences that do not differ in geometry or disparity from one another. For example, the first image sequence may be a 2D image sequence that has not been processed by any device or workflow. The second image sequence may be the result of processing the first image sequence by a device or workflow. Alternatively, the first image sequence may be an image sequence that has been processed by a first device or workflow. The second image sequence may be the same image sequence that has been processed through a second, different device or workflow.

In one example, the first image sequence may be the reference sequence in terms of color (e.g., the Master sequence) and the second image sequence is the sequence to be corrected (e.g., the Slave sequence), such as, for example, to fit with the first image sequence in terms of color look.

In one example, the method 200 may completely receive the first image sequence at block 210 and may completely receive the second image sequence at block 220. The method 200 may perform the block subsequent to blocks 210 and 220 after completely receiving the first and second image sequences. Alternatively, the method 200 may partially receive the first image sequence at block 210 and may partially receive the second image sequence at block 220 and may perform the block subsequent to blocks 210 and 220 while receiving images in the first and second image sequences.

Fig. 2A illustrates an exemplary first image sequence 201 and an exemplary second image sequence 202. The first image sequence 201 contains the same number of images as second image sequence 202. Moreover, the first and second image sequences 201 and 202 will have the same sequence of images, except that there may be color differences between the images due to the use of different workflows or devices. The first image sequence 201 and the second image sequence 202 may be the first and second image sequences received at blocks 210 and 220 of Fig. 2, respectively.

Fig. 2 further includes block 230. Block 230 may begin a loop (hereinafter "loop(1)") that will loop through images in the first and second image sequences using variable i having a range from one through the number of images in either image sequence. Because the first image sequence and the second image sequence have the same number of images, the number of images in each of the image sequences should be the same. Block 230 may pass control to block 231. Alternatively, the functionality of block 231 may be integrated within loop(1) at block 230.

Block 231 may identify image pair i= $(i_1, i_2)$. Image pair i may consist of a first image $i_1$ corresponding to the ith image from the first image sequence and of a second image $i_2$ corresponding to the ith image from the second image sequence. Thus, at each iteration of loop(1), loop(1) loops through image pair i consisting of the corresponding ith images in the first and second image sequences. For example, when i=1, loop(1) loops through a pair of images consisting of image 1 of the first image sequence and image 1 of the second image sequence. In one example, loop(1) may loop through all the image pairs in the first and second image sequences. In another example, loop(1) may loop through only select image pairs in the first and second image sequences. Block 231 may then pass control to block 240.

Block 240 may determine the color skew between the images in the image pair i. Color skew may be defined as the amount of color differences between two images. In one example, block 240 may perform a color skew analysis. For example, block 240 may analyze and/or determine color histograms of each image in the image pair i. In one example, block 240 may provide a color skew analysis metric (e.g., the Earth Mover Distance (EMD)) corresponding to the distance between the color histograms of the images $i_1$ and $i_2$ in image pair i. In another example, block 240 may analyze the luminance and color profiles of the images $i_1$ and $i_2$ in image pair i. In one example, the luminance and color profiles of each of the images may be analyzed line by line on each image. In one example, the luminance and color profiles of each of the images may be analyzed only in either the horizontal direction or in the vertical directions, if the color skew main direction is already known. In one example, block 240 may compute the variance of the luminance and color profiles between each of the images $i_1$ and $i_2$ in image pair i. In one example, block 240 may determine the color skew metric based on an average over a period of time. In another example, block 240 may determine the color skew metric at a certain time. Block 240 may then pass control to block 250.

Block 250 may define region or block parameters for each of the images $i_1$ and $i_2$ in image pair i. In one example, block 250 may divide into blocks or regions each of the images $i_1$ and $i_2$ in image pair i. A block or region may be defined as a spatial portion of an image. A block may have a rectangular or square shape. A region may be a part of the image that is not a block (e.g., a part of a block or more than a block). In one example, block 250 may define the block or region size parameters as N x M (N being the number of blocks in the horizontal direction and M the number of blocks in the vertical direction).

Fig. 2B illustrates an exemplary first image sequence 203 and an exemplary second image sequence 204, where each image in each image sequence is divided into blocks. The first image sequence 203 may be the first image sequence 201 of Fig. 2a, where each image in the image sequence 201 is divided into N number of blocks horizontally and M number of blocks vertically. The second image sequence 204 may be the second image sequence 202 of Fig. 2a, where each image in the image sequence 202 is divided into N number of blocks horizontally and M number of blocks vertically.

Block 250 of Fig. 2 may determine the number of blocks or regions based on the color skew determination from block 240. In one example, block 250 may determine the amount of blocks or regions per image or per image sequence based on the color skew information (e.g., color skew determinations at block 240). For example, block 250 may determine the number of blocks or regions based on the color skew information provided by block 240 (e.g., EMD value, the percentage of difference between the color or luminance profiles of both sequences). For example, the number of blocks or regions may be directly proportional to a color skew metric. Alternatively, block 250 may determine the number of blocks or regions independently of the determinations of block 240.

In one example, based on a determination that a color skew metric is above and/or equal to a certain threshold (e.g., by determining of a high variance value), block 250 may determine that each image in image pair i should be divided into a high number of blocks or regions. For example, block 250 may determine that a metric(s) provided by block 240 (e.g., a color gradient value) exceeds a first threshold. Block 250 may determine that the images $i_1$ and $i_2$ in image pair should be divided into a high number of blocks or regions. Block 250 may divide the images accordingly. The high number of blocks or regions allow for a better sampling space, thereby allowing for higher accuracy correction, including by increasing the number of generated Look Up tables.

In another example, based on a determination that a color skew metric is below a threshold, block 250 may determine that each image in image pair i should be divided into a low number (e.g., lower than the high number) of regions or blocks.

In another example, based on a determination that a color skew metric is below a threshold, block 250 may determine that image pair i need not be processed. For example, block 250 may determine that color look grabbing should not be performed for the current image pair i. Block 250 may then end processing of current image pair i. For example, block 250 may indicate that the processing of blocks 250-291 should be skipped for image pair i; such as, for example, by incrementing the value of i. For example, block 250 may determine that color look grabbing should not be performed for the current image pair i based on a determination that a metric of the current image pair i is below or equal to a certain threshold. Alternatively, this determination may be performed earlier in the method 200 (e.g., at block 240 or at a preprocessing stage) or later in method 200.

In one example, block 250 may determine whether the percentage of difference between the color profiles of two image sequences exceeds a threshold.

Fig. 2C illustrates two horizontal luminance profiles, a first horizontal luminance profile 241 of a first image sequence and a second horizontal luminance profile 242 of a second image sequence. In one example, block 250 may compare the difference between first horizontal luminance profile 241 and second luminance profile 242 to a threshold. Block 250 may compare the difference in the horizontal profiles 241 and 242 with a threshold or thresholds.

In one example, block 250 may determine if the percentage of difference is above a threshold (e.g., 10%). For example, block 250 may determine whether the percentage difference of the color profiles is over 10%. Based on this determination, block 250 may then determine that each image in the image pair i should be divided into 10 blocks horizontally and 3 blocks vertically. In one example, based on the determination that the percentage difference exceeds a threshold (e.g., 10%) and based on determination that the images have an HD resolution (1920 x 1080), block 250 may determine that each image in image pair i should be divided into blocks or regions of size of 192 x 360.

In another example, block 250 may determine if the percentage of difference between color profiles is between 5% and 10%. If the percentage is between 5% and 10%, block 250 may determine that each image in image pair i should be divided into blocks or regions of size of 5 blocks horizontally by 2 blocks vertically.

In another example, if block 250 determines that the percentage of difference between the color profiles of both sequences is below 0.5%, then block 250 may indicate that correction for image pair i is not needed. Block 250 may then indicate that processing of image pair i should be terminated (e.g., by incrementing the value of i).

Block 250 may pass control to block 260. Block 260 may select key frames from the first and second image sequences for image pair i. For example, block 260 may determine a frequency at which key frames from the first and second image sequences should be sampled. In one example, block 260 may select sampling frequency of key frames based on the number of blocks or regions that images in image pair i have been divided into (e.g., by block 250). In another example, block 260 may select the key frames sampling frequency independently of the values provided by block 250. In another example, the number of key frames may be predefined (e.g., such that all image pairs in the first and second image sequences are sampled at a preset frequency). In one example, the sampling of key frames may be performed earlier or later than block 260 during method 200.

A frame may be an image at a certain point in time. A key frame is a frame selected from an image sequence. A key frame may be selected because it contains a higher number of colors than other frames. In one example, the key frames may be selected at regular time intervals, where the time intervals may be determined based on parameters of the first and second image sequences. Key frames allow the processing of subsequent to be limited to only the information from the key frames, thereby reducing computation time by limiting the amount of frames that are processed. For example, Color Look Grabbing and Look Up Table computations may be performed only for the defined key frames. By defining key frames, block 260 may ensure consistency in the color differences between the first and second image sequences 210 and 220. Key frames may be useful when there is consistency in color differences between the first and second image sequences along short sequences.

In one example, the key frames may not depend on the number of blocks or regions. For example, if images $i_1$ and $i_2$ in image pair i are HD images, block 260 may determine or receive a predefined number of key frames. The number of key frames may be predefined earlier in method 200.

In another example, block 260 may determine a frequency at which key frames from the first and second image sequences should be sampled. For example, for spatio-temporal pictures that have a resolution higher than HD (4x, 8x, ...), the accuracy may be increased by increasing the number of HD key frames that are sampled in a spatio-temporal image.

In another example, block 260 may determine the sampling frequency of key frames based on number of blocks or regions determined by block 250. For example, if block 250 has divided images $i_1$ and $i_2$ in image pair i into N x M blocks, then block 260 may determine that the number of key frames is equal to a maximum of (N-1) x (M-1). That is, if (N,M) is the number of blocks is X and Y directions, the optimized number of key frames may be (N-1) x (M-1). The time interval for sampling the key frames may be determined based on the number of blocks or regions of the images $i_1$ and $i_2$ in image pair i. For example, if (N,M) is the number of blocks in the X and Y directions, the time interval for sampling the key frames may be determined as such:

$$\text{Eq. No. (1)} \qquad t = \frac{n \times T_s}{(N-1) \times (M-1) - 1}$$

Fig. 2B illustrates an example of key frames selected at time intervals t in accordance with present principles. Fig. 2B illustrates a plurality of time intervals t corresponding to the time when key frames would be sampled. The value of time interval(s) t may be determined based on Eq. No. (1) above, where $n \in [0;(N-1) \times (M-1)-1]$. For example, key frames may be selected when time interval(s) t are: t=0, t=T t=2T, ..., t= Ts, where T= Ts / [(N-1) x (M-1)-1]. In another example, the time interval(s) t for sampling key frames may be manually selected by the system or by a user of the system. The variable Ts, shown in Fig. 2B, may be the entire period of a given sequence. In one example, variable Ts may correspond to the total length of time of the image sequence (e.g., 5 seconds). The total number of frames in the sequence may be equal to Ts x F (where F is the sampling frequency of the sequence, e.g., 24 fps). For example, the number of frames to be analyzed may be 5 second x 24 fps = 120 frames.

Block 260 may pass control to block 270. Block 270 begins a second loop (hereinafter "loop(2)") using variable j having a range from one through the total number (#) of blocks in either image of the image pair i. Loop(2) may loop through pairs of blocks in images $i_1$ and $i_2$ in image pair i. Images $i_1$ and $i_2$ i should have been divided into the same number of blocks. The loop limit block 270 may then pass control to block 271. Alternatively, the functionality of block 271 may be integrated within loop(2) and block 270.

Block 271 may identify a pair of blocks j= $(j_1, j_2)$, where a first block $j_1$ corresponds to the jth block in the first image $i_1$ and a second block $j_2$ corresponds to the jth block in the second image $i_2$ in image pair i. For example, when j=1, the loop(2) may loop through the pair of blocks centered on the top left corner of each image $i_1$ and $i_2$ of image pair i. Block 271 may then pass control to block 280.

Block 280 may create spatio-temporal pictures. Block 280 may create a pair of spatio-temporal pictures for the jth block of the first and second image sequences. The pair may comprise of a first spatio-temporal picture corresponding to the first image sequence and a second spatio-temporal picture corresponding to the second image sequence. Block 280 may create spatio-temporal pictures using key frames. The spatio-temporal pictures may be created by concatenating the blocks corresponding to block j in each key frame.

Block 280 may create a first spatio-temporal picture using the jth block of the key frames of the first image sequence (e.g., blocks from each key frame of the first image sequence corresponding to the first block $j_1$ in block pair j). Block 280 may create a second spatio-temporal picture using the jth block of the key frames of the second image sequence (e.g., blocks from each key frame of second image sequence corresponding to the second block $j_2$ in block pair j). Alternatively block 280 may create the first and second spatio-temporal pictures using a subset of the key frames of the first and second spatio-temporal pictures, respectively (e.g., a subset corresponding to a first and second sub-sequences of the first and second spatio-temporal pictures).

Fig. 2D illustrates an exemplary method for creating spatio-temporal pictures in accordance with present principles. In one example, the exemplary method of Fig. 2D may be implemented by block 280. Block 281 begins a third loop (hereinafter "loop(3)") using variable k having a range from one through the total number (#) of key frames in either image sequence. The loop limit block 281 then may pass control to a functional block 282. Alternatively, the functionality of block 282 may be integrated within loop(3).

Block 282 may identify a key frame block pair k= $(k_1, k_2)$. Key frame block pair k is composed of a first block $k_1$ corresponding to the jth block in the kth key frame of the first image sequence. Key frame block pair k further includes a second block $k_2$ corresponding to the jth block in the kth key frame of the second image sequence. Block 282 may then pass control to block 283.

Block 283 may add key frame block pair k to a pair of spatio-temporal pictures. In particular, block 283 may add the first block $k_1$ of key frame block pair k to a first spatio-temporal picture and may add the second block $k_2$ of key frame block pair k to a second spatio-temporal picture. For example, when j=1, the loop at block 281 may loop through the first pair of blocks centered on the top left corner of the key image frames.

Thus, the first spatio-temporal picture corresponds to the key frames in the first image sequence and the second spatio-temporal picture corresponds to the key frames in the second image sequence. In particular, the first spatio-temporal picture corresponds to the blocks of the key frames in the first image sequence corresponding to the first block $j_1$ in block pair j. The second spatio-temporal picture corresponds to the blocks of the key frames in the second image sequence corresponding to the second block $j_1$ in block pair j. The two spatio-temporal pictures may be created by concatenating the blocks corresponding to the current processed block pair j in each key frame. Block 283 may then pass control to block 284. Block 284 may then end loop(3).

Fig. 2E illustrates an exemplary spatio-temporal picture 205 created from image blocks from key frames from first image sequence 204. Spatio-temporal picture 205 is created by concatenating key frame blocks corresponding to the same position. For example, the first block in spatio-temporal picture 205 is a block at a position (e.g., position j) from a key frame sampled at t=0. As shown in Fig. 2D, this block from key frame t=0 is placed in the upper left hand corner. Spatio-temporal is then created by concatenating blocks from the same position in subsequent key frames (e.g., t=1, t=2 .... T=M-1)

A spatio-temporal picture (e.g., spatio-temporal picture 205) provides a sampling for a given block of all colors that appear during the movement/panning of a camera at different times (key frames). In a sequence, different colors might occur at different times while the camera is being moved/panned. For example, while the camera the image sequence might change from the blue sea to the yellow sand of the seashore with green trees in the background). The first frames of the sequence may not contain all representative colors (e.g., the first frames may only contain only the blue sky and dark blue sea, but do not contain sand or trees). The spatio-temporal picture provides, for a given block, a sampling of all colors that are going to appear in that block during the movement/panning of a camera at different times (key frames). A color look grabber is applied to the spatio-temporal picture to compute a Look Up Table (LUT) corresponding to the color transform between first sequence and second sequence.

Block 290 may apply Color Look Grabbing between the pair of spatio-temporal pictures for block j received from block 280. As described above, the pair of spatio-temporal pictures includes a first spatio-temporal picture corresponding to the jth block of image $i_1$ of the first image sequence and a second spatio-temporal picture corresponding to the jth block of image $i_2$ of the second image sequence. Block 290 may analyze the color distribution on each of the first spatio-temporal picture and the second spatio-temporal picture. Block 290 may perform Color Look Grabbing to determine the color transform that transforms the first spatio-temporal picture into the second spatio-temporal picture. The resulting color transform may be an LUT. The LUT may be a text file (.itx or .cube format) describing the transformation from a first image in a first color space to a second image in a second color space corresponding to the first image.

In one example, block 290 performs Color Look Grabbing based on the respective color distributions of the first and second spatio-temporal pictures. Block 290 may determine a transform, (e.g., a LUT) that allows the conversion between the first spatio-temporal picture into the second spatio-temporal picture. For example, applying the resulting LUT to the first spatio-temporal picture results in the second spatio-temporal picture. Block 290 may then pass control to block 291.

Fig. 2F illustrates an exemplary LUT 209, a first spatio-temporal picture 206 for a given block from a first image sequence and a second spatio-temporal picture 207 for a block in the same position as the given block in a second image sequence. LUT 209 is created when block 208 performs color look grabbing between the first and second spatio-temporal pictures 207 and 208. The LUT 209 is an example of an LUT that may be determined by block 290.

Block 291 applies the transform (e.g., the resulting LUT) received from block 290 to block j of image $i_1$ from the first image sequence. That is, block 291 applies the transform from block 290 to block $j_1$ of image $i_1$.

Applying the transform (LUT) to the block of the first image sequence provides several advantages. One advantage is that the LUT is only applied to a block at a time, thereby allowing localized color corrections instead of global color corrections. Another advantage is that all colors of the image sequence are considered when computing the LUT. Another advantage is that method 200 optimizes and reduces computation time by selectively determining when segmentation is not necessary. Another advantage is that method 200 is faster and more efficient because it is an automatic method that does not include any human intervention to locally correct colors. Another advantage of method 200 is that it minimizes or eliminates the processing of content several times in order to converge towards an acceptable result. Another advantage is an optional blending effect that ensures that color corrected block structures are not visible.

Block 291 may further apply an optional blending effect. The blending effect may be applied between a transformed image block and its neighboring (adjacent) blocks that have LUTs computed. In another example, the optional blending effect may be applied after the end of loop(2) at block 292. In this configuration, block 291 may store the value of the LUT(s) in memory and the optional blending effect may be applied after block 292 after all the LUTs have been computed. In this configuration, the blending may be applied to all LUTs of the entire image $i_1$. In one example, the blending effect may be applied between the transformed image block j-1 and the transformed image block j in the vertical and horizontal directions and between the transformed image block j and the transformed image block j+1 in the vertical and horizontal directions.

In one example, an optional blending effect may be applied to transformed image blocks. For example, the optional blending effect may be applied to adjacent blocks that are transformed in accordance with method 200 in accordance with principles described in connection with Fig. 2. For example, the blending may be performed on adjacent blocks that may have been transformed by adjacent LUTs in accordance with principles described in connection with Fig. 2. The optional blending effect provides the advantage of allowing the transition at the border between the blocks to be invisible. The border of the blocks is a surface of x pixels large at the perimeter of the block.

The blending effect may be performed by multiplying the pixels of a transformed image block (e.g., an image block that has been transformed using the LUT determined in block 290 of method 200 of Fig. 2), in whole or in part, by a multiplying factor. The value of the multiplying factor at the pixels at the border of the image block may linearly increase from of 0 to 1. The value of the multiplying factor at the pixels inside and outside the block border may be 1 (or 100%). The resulting blended and transformed image block may then be outputted.

Block 292 may end loop(2) and pass control to block 293. Block 293 may end loop(1) and output the resulting transformed first image sequence.

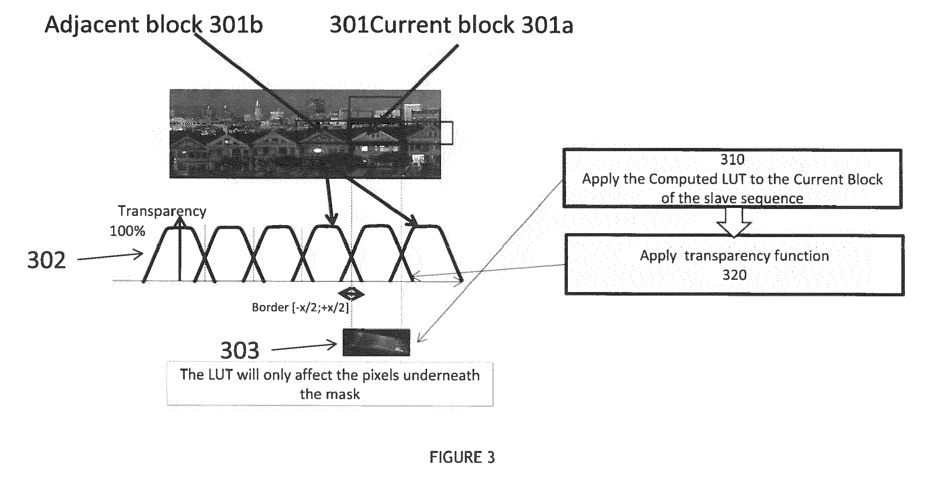

Fig. 3 is a diagram illustrating an exemplary method for performing a blending or feathering effect between adjacent blocks in accordance with present principles. Fig. 3 includes a current image block 301a that is being color corrected in accordance with present principles (e.g., method 200). Block 301b is the image block(s) adjacent to current image block 301a (e.g., one or more blocks of the four blocks (top, bottom, left, right) surrounding the current block 301a). Fig. 3 further includes a transparency function 302 and an LUT 303 that is applied to the current image block 301a. The transparency function 302 is represented on a graph where the X axis represents spatial position and the Y axis represents transparency values in terms of percentage (%). The border of transparency function 302 is the area of the function where the transparency function value is not 100%. The border is defined by the variable x which represents a certain amount of pixels.

In one example, LUT(s) are applied to each of the current block 301a and one or more of the adjacent block(s) 301b. The LUT(s) may be determined in accordance with present principles, including, for example, techniques discussed in connection with Fig. 2. The blending/transparency function 302 may be applied to the border area of the transformed current block 301a and each of the one or more transformed adjacent blocks 301b. The LUT 303 of the current block 301 may be blended by overlapping the LUT transforms of adjacent blocks (for example for current block 301a and the block 301b). The LUT 303 will only affect the pixels underneath the current block plus the overlapping border. A transparency function (for example linear function 302) may be assigned at the edges of the blocks such that the transparency of a current block and an adjacent block are complementary (e.g., transparency of block [j] = 1- transparency of block [j+1]).

As an example, a pixel whose initial values are R, G and B, and final values after color correction are R',G', B', and which belongs to the border (or overlapping region) between 2 adjacent blocks [j] and [j+1] will be computed using the 2 adjacent LUTs and the transparency function according to the equation:

$$Eq.\,No.\,1 \begin{matrix} R' \\ G' \\ B' \end{matrix} = M_j \cdot \begin{matrix} R \\ G \\ B \end{matrix} \cdot (\text{Transparency of block [j]}) + M_{j+1} \cdot \begin{matrix} R \\ G \\ B \end{matrix} \cdot (\text{Transparency of block}$$

$$[j+1])$$

Within Equation No. 1, $M_j$ is the matrix corresponding to LUT j,
$M_{j+1}$ is the matrix corresponding to the adjacent LUT j+1, and
transparency of block [j] = 1- transparency of block [j+1]).

The LUT and transparency functions may be applied at the same time. If the pixel does not belong to the border

$$\text{Equation No. 2} \quad \begin{matrix} R' \\ G' \\ B' \end{matrix} = M_j \cdot \begin{matrix} R \\ G \\ B \end{matrix}$$

Fig. 3 further illustrates a method for blending in accordance with present principles. Functional block 310 applies the computed transform (LUT) (e.g., the LUT computed at block 290 of method 200) to the current block 301a to determine a transformed image block.

Block 310 then passes control to block 320. Block 320 applies a transparency function (e.g., transparency function 302) to the transformed image block. As described above, block 320 applies transparency at the pixels at the edges of the transformed image block. Block 320 may further apply the transparency function and the x/2 pixels of the blocks neighboring the transformed image block. The output of block 320 is a new image block with modified pixel colors inside and at the border of the block.

**Exemplary Process of Correcting Color Differences in 3D Image Sequences**

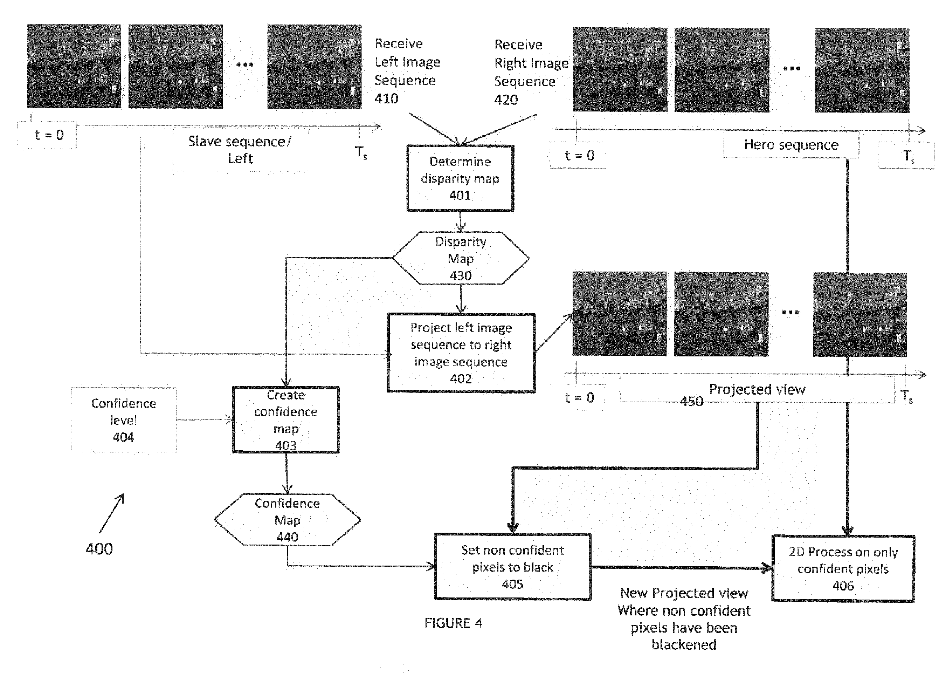

Fig. 4 illustrates an exemplary method 400 for color correcting 3D stereo or multi-view image sequences using color look grabbing in accordance with present principles. A 3D stereo image sequences may be composed of at least two views (e.g., a left view image sequence and aright view image sequence). For example, the left eye of the spectator visualizes the left image sequence and the right eye of the spectator visualizes the right image sequence. For reasons inherent to image production (e.g. issues with the 3D camera stereo rig) the colors in the right image sequence often differ from the colors of the left sequence. For example, during the creation of 3D stereo image sequences if a beam splitter has a poor quality level or if polarized light is present in the scene, the color gradient between left and right pictures can be very high.

As used herein, a hero sequence may be defined as a reference sequence or master sequence having the correct or targeted colors. A slave sequence may be defined as the sequence to be color corrected so that it fits with the hero sequence.

The method 400 illustrates a process where, as an example the right image sequence is considered the hero or master image sequence and the left image sequence is considered as the slave image sequence to be corrected. In another example, the method 400 may be performed where the left image sequence is considered the hero or master image sequence and the right image sequence is considered as the slave image sequence to be corrected.

The method 400 may receive a slave image sequence 410 (e.g., a left view image sequence). The method 400 may receive a hero image sequence 420 (e.g., a right view image sequence). The slave and hero (left and right) image sequences may be the left and right views in a 3D stereo sequence. The method 400 adjusts the color of the slave image sequence relative to color of the hero image sequence. For example, the method 400 adjusts color disparities between the left and right image sequences such that the 3D image sequences can be properly displayed.

In one example, the method 400 may completely receive the slave sequence 410 and may completely receive the hero sequence 420. Alternatively, the method 400 may partially receive the slave sequence 410 and may partially receive the hero sequence 420. The method 400 may be performed while continuing to receive the slave and hero sequences 410 and 420.

Block 401 determines a disparity map 430 for the received slave and hero sequences 410 and 420. In one example, block 401 may determine the disparity map 430 based on the distance between the corresponding pixels of the slave and hero sequences 410 and 420. For example, block 401 may calculate the distance between the corresponding pixels of the slave and hero sequences 410 and 420. The resulting disparity map 430 reflects the any movement between corresponding pixels that are visible in both views (e.g., excluding occlusions). The resulting disparity map 430 may be a mapping of vectors between the slave and hero image sequences 410 and 420. The disparity map 430 may include both positive and negative values. A negative disparity value may signify that the pixels appear in front of the screen plane. A positive disparity value may signify that the pixels appear behind the screen plane. A null disparity value may signify that the pixels appear in the screen plane. The screen plane is the physical plane of the visualization screen. When watching 3D stereo content on a 3DTV with glasses, some objects seems to be placed in front, behind or in the screen plane depending on the stereo camera positions and convergence angle.

Block 402 project the slave image sequence (e.g., the left view) onto the hero image sequence (e.g., the right view) to create a new projected view 450 (e.g., a new right view). Block 402 may determine the new projected view 450 based on slave image sequence 410 and disparity map 430. For example, block 402 may compute the new projected view 450 in accordance with the techniques described in "Adaptive Reconstruction of Intermediate views from Stereoscopic Images" by Zhang et al. The new projected view 450 may contain the same content as the hero view 420, but may have the same colorimetric characteristics as the slave view 410.

Block 403 may determine a confidence map 440 based on disparity map 430. The confidence map 440 may indicate which pixels in the disparity map have a confidence level high enough to be exploited by the 2D process block. For example, the confidence map 440 may determine if a disparity value is above, equal or below a threshold. In one example, the confidence map 440 may be a black and white representation of the block, image frame, and/or image frame sequence. In one example, pixels that are above (or above and equal to) a threshold may be indicated in black while pixels that are below (or below and equal to) the threshold may be indicated in white. In another example, pixels that are above (or above and equal to) a threshold may be indicated in white while pixels that are below (or below and equal to) the threshold may be indicated in black.

Block 403 may receive disparity map 430 and a desired confidence level 404 from user (high, medium, low). In one example, the confidence map 440 ensures that Color Look Grabbing will only be performed on pixels with disparity at or above the level of confidence 404. For example, the confidence map 430 allows method 400 to avoid processing pixels that have uncertain disparity value. An advantage of the confidence mask also improves the quality of the generated LUT by avoiding processing of occluded objects. For instance, the value of disparity can be uncertain for pixels objects that are occluded in one view. Also, nothing is more similar to a blue sky pixel than another blue sky pixel. It is then very difficult to determine the disparity value of a particular blue sky pixel. The confidence map will reject these pixels from the calculation and only keep those having some detailed textures.

Block 405 may apply the confidence map 440 to the projected view 450. In one example, block 405 may set non-confident pixels to a black value. The confidence map 440 and the projected view 450 are corresponding structures, such that there is an equivalent pixel or value in the confidence map 440 for every pixel in the projected view 450. In one example, block 405 may determine, for each pixel of the projected view 450, whether the each pixel has a corresponding blacked out pixel value in the confidence map 440. If a pixel of the projected view 450 has a corresponding blacked out value in the confidence map 440, that pixel may then be blacked out in the modified projected view determined by block 405. Thus, block 405 may determine the modified projected view by blacking out the pixels of the confidence map 440 that correspond to non-confident (e.g., black value) pixels in the confidence map 440.

Block 405 may output a projected view where all non-confident pixels have been set to black. The black pixels will not be taken into account in the computation carried out by the 2D process block 406. The color profile of the modified newly projected sequence from block 405 may be the same as color profile of the slave sequence 410.

Block 406 performs two dimensional color correcting process on only confident pixels (non-black pixels) of the newly projected image sequence view outputted by block 405 and the hero image sequence view 420. The disparity map 430 and the confidence map 440 ensure that the modified projected image sequence view 450 is geometrically identical to the hero image sequence 420.

In one example, block 406 may compute LUT(s) per block from the projected sequence from block 405 to the hero sequence 420. In one example, block 406 may compute LUT(s) in accordance with principles described in connection with method 200 of Fig. 2. Block 406 may apply method 200 in Fig. 2 to the confident pixels (non-black pixels) of the newly projected image sequence view outputted by block 405 and the hero image sequence view 420. The confident pixels (non-black pixels) of the newly projected image sequence view outputted by block 405 may correspond to first image sequence 210 of method 200 and the hero image sequence view 520 may correspond to the second image sequence 220 of method 200.

The LUT(s) computed by block 406 may then be applied to the slave sequence 410 in order to obtain a color profile in accordance with the hero sequence.

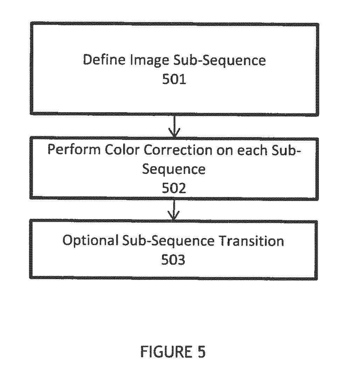

In another example, Fig. 5 illustrates an exemplary method 500 for color correcting image sub-sequences in accordance with present principles. Method 500 includes block 501 for defining sub-sequences of an image sequence. Block 501 may define sub-sequences of the sequence based on different lighting conditions (outdoor, indoor for instance). For example, block 501 may define a new sub-sequence within an image sequence based on a change of lighting conditions. For example, in a sequence where the camera is moving from outside lighting conditions (e.g., sun light) to inside lighting conditions (e.g., bulb light) the colors will be very different; a new sub-sequence would be defined based on the change in such lighting conditions. In another example, when shooting a stereo movie, the lighting conditions may vary during the shot (camera getting from outdoor to indoor conditions). Defining sub-sequences based on lighting conditions allows the image sequence to be separated to increase the accuracy of the color correction process. In particular, during the color correction of an image sequence with various sub-sequences, different transforms or LUTs would need to be utilized for different sub-sequences.

Fig. 5 further includes a block 502 for applying color correction process to each image sub-sequence. In one example, block 502 may apply the method 400 of Fig. 4 to each image sub-sequence. In another example, block 502 may apply the method 200 of Fig. 2 to each image sub-sequence.

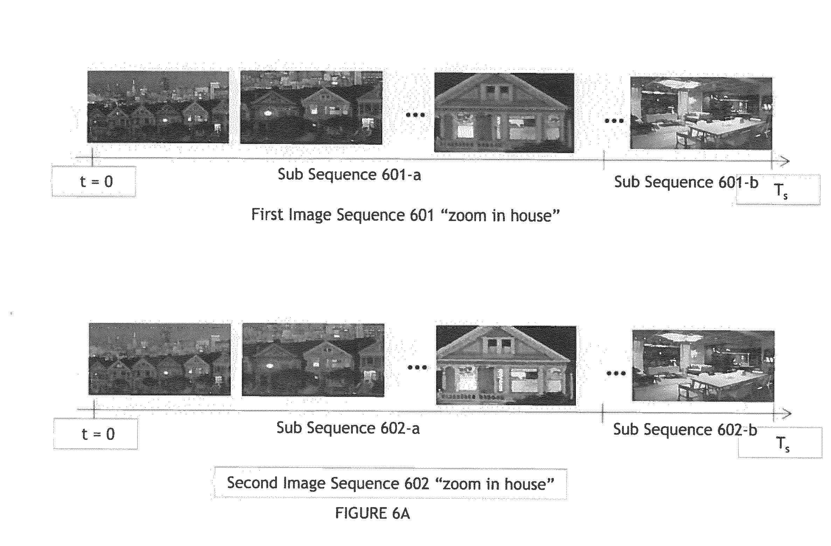

Fig. 6A illustrates an example of a first image sequence 601 and its subsequences 601-a and 601-b and a second image sequence 602 and its subsequences 602-a and 602-b. The first and second image sequences 601 and 602 illustrate an exemplary sequence of a city at night (a first subsequence) and a sequence of the camera is zooming into one of the houses and into the house's living room (a second subsequence). The sub-sequences are subject to various outdoor v. indoor lighting conditions which may widely differ from one another.

The first image sequence 601 is split into two subsequences 601-a and 601-b. The second image sequence 602 is split into two subsequences 602-a and 602-b.

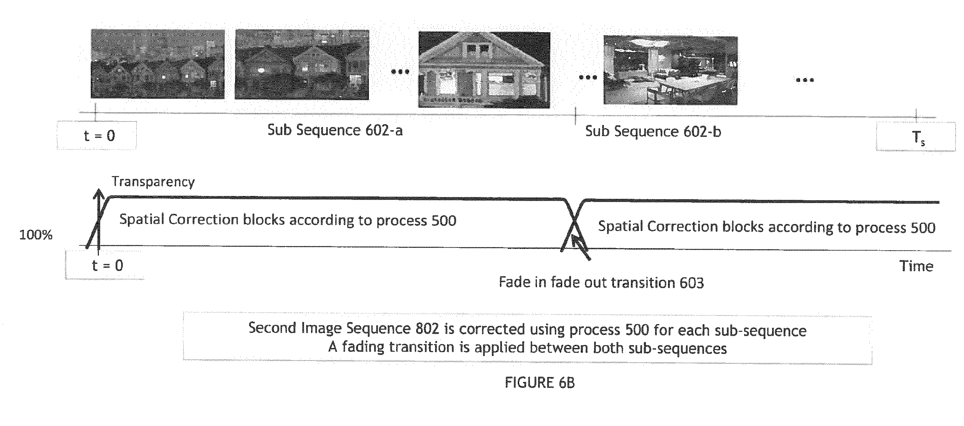

Fig. 6B illustrates an example of temporally blending LUT between adjacent sub-sequences. For example, adjacent LUTs may be placed under Adjustment Layers, partially recovering each other. By applying on the opacity value of the Adjustment layers, it is possible to temporally blend the adjacent LUTs, in a similar way as it is done for the spatial feathering. The sub-sequence 602-a has been corrected using process 500. The sub-sequence 602-b has been corrected using process 500. As there is no cut between both sub-sequences, a fade in/out transition may be utilized between sub-sequences to provide smooth transition between the color corrections of the two sub-sequences.

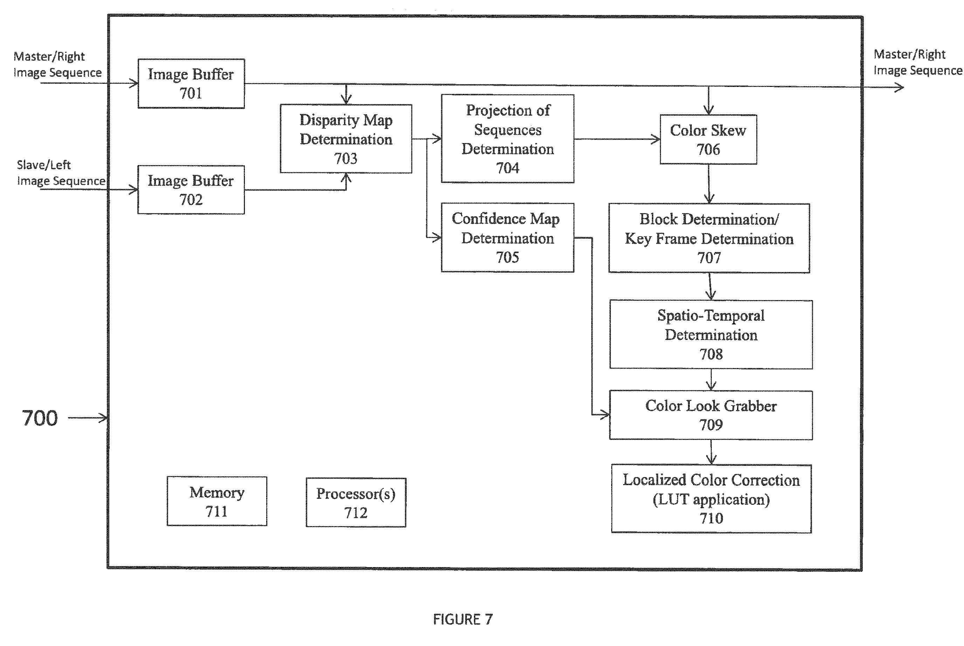

Fig. 7 illustrates an color processing system 700 in accordance with present principles for accomplishing color correction. Color processing system 700 may include one or more blocks 701-712. Color processing system 700 may include image buffers 701 and 702. The image buffer 701 may receive the master, right, first image sequence. The image buffer 702 may receive the slave, left, second image sequence. In one example, the image sequence(s) received by image buffer 702 is the image sequence being color corrected in accordance with present principles, e.g., the principles described in connection with Figs. 1-6B. In one example, the image sequence(s) received by image buffer 701 may be outputted without any modifications to the received image sequence.

Color processing system 700 may further include projection of sequences determination block 703, disparity map determination block 704, and confidence map determination block 705. In one example, blocks 703-705 may be optional. Blocks 703-705 relate to color correction of stereo (e.g., 3-D) image sequences. In one example, blocks 703-705 may be configured to operate in accordance with principles described in connection with Fig. 4.

The color processing system 700 may further include color skew block 706 (which may be configured for color skew analysis), block/key frame determination block 707 (which may perform image block generation and key frame generation 708), spatio-temporal determination block 708, color look grabber block 709 (which may determine a set of LUTs), and localized color correction block 710 (which may apply color correction, e.g., the set of LUTs from block 708, to the second, slave image sequence from image buffer 702). In one example, blocks 706-710 may be configured to operate in accordance with principles described in connection with Figs. 2-6B.

The color processing system 700 further includes a memory 711 and processor(s) 712. The memory 711 may include one or more memories stored locally and/or remotely (e.g., cloud). The memory 711 may store data related to the operations performed by one or more blocks 701-710. The processor(s) 713 may perform processing of data related of one or more blocks 701-710. In one example, blocks 701-712 may be implemented locally and/or remotely. Blocks 701-710 may be implemented in hardware. The hardware may be configured to operate in accordance with principles described in connection with Figs. 2-6B utilizing memory 711 and processor(s) 712. In another example, the hardware may be configured to perform software operations in accordance with principles described in connection with Figs. 2-6B. In one example, the system 700 may be implemented as preprocessing before or after encoding and/or decoding.

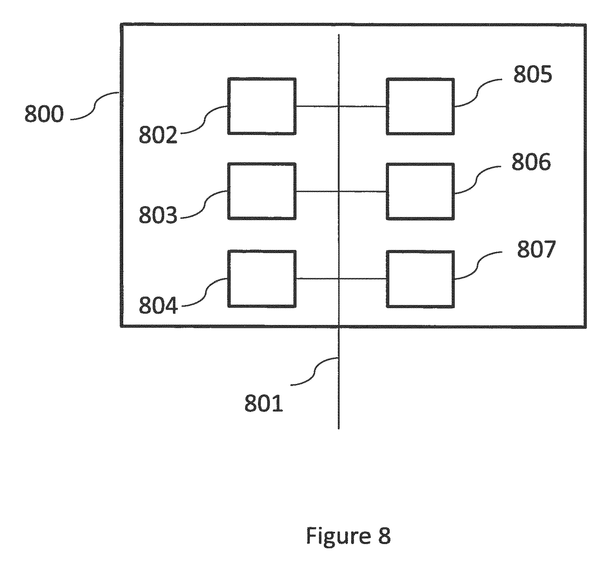

Fig. 8 represents an exemplary architecture of a device 800 which may be configured to implement methods described in relation with Figs. 2-6B. In one example, Fig. 8 represents an apparatus that may be configured to implement the color processing methods according to present principles.

Device 800 comprises following elements that are linked together by a data and address bus 801:

- a microprocessor 802 (or CPU), which is, for example, a DSP (or Digital Signal Processor);
- a ROM (or Read Only Memory) 803;
- a RAM (or Random Access Memory) 804;
- an I/O interface 805 for reception of data to transmit, from an application; and
- a battery 806 (or other suitable power source).

According to an example, the battery 806 is external to the device. In each of mentioned memory, the word « register » used in the specification can correspond to area of small capacity (some bits) or to very large area (e.g. a whole program or large amount of received or decoded data). ROM 803 comprises at least a program and parameters. Algorithm of the methods according to the invention is stored in the ROM 803. When switched on, the CPU 802 uploads the program in the RAM and executes the corresponding instructions.

RAM 804 comprises, in a register, the program executed by the CPU 802 and uploaded after switch on of the device 800, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

According to a specific example, the image or picture is obtained from a source. For example, the source belongs to a set comprising:

- a local memory (803 or 804), e.g. a video memory or a RAM (or Random Access Memory), a flash memory, a ROM (or Read Only Memory), a hard disk ;
- a storage interface (805), e.g. an interface with a mass storage, a RAM, a flash memory, a ROM, an optical disc or a magnetic support;
- a communication interface (805), e.g. a wireline interface (for example a bus interface, a wide area network interface, a local area network interface) or a wireless interface (such as a IEEE 802.11 interface or a Bluetooth® interface); and
- an image capturing circuit (e.g. a sensor such as, for example, a CCD (or Charge-Coupled Device) or CMOS (or Complementary Metal-Oxide-Semiconductor)).

According to different examples, the an image or pciture is sent to a destination; specifically, the destination belongs to a set comprising:

- a local memory (803 or 804), e.g. a video memory or a RAM, a flash memory, a hard disk;
- a storage interface (805), e.g. an interface with a mass storage, a RAM, a flash memory, a ROM, an optical disc or a magnetic support;
- a communication interface (805), e.g. a wireline interface (for example a bus interface (e.g. USB (or Universal Serial Bus)), a wide area network interface, a local area network interface, a HDMI (High Definition Multimedia Interface) interface) or a wireless interface (such as a IEEE 802.11 interface, Wi-Fi ® or a Bluetooth ® interface); and/or

- a display. Alternatively, the methods and systems of present principles may be implemented in post-production workflow software. For example, the invention may be implemented in 2D and 3D movie post-production tools and services and in automatic stereo color correction of home-made 3D movies software.

Numerous specific details have been set forth herein to provide a thorough understanding of the present invention. It will be understood by those skilled in the art, however, that the examples above may be practiced without these specific details. In other instances, well-known operations, components and circuits have not been described in detail so as not to obscure the present invention. It can be appreciated that the specific structural and functional details disclosed herein may be representative and do not necessarily limit the scope of the present principles.

Various examples of the present invention may be implemented using hardware elements, software elements, or a combination of both. Some examples may be implemented, for example, using a computer-readable medium or article which may store an instruction or a set of instructions that, if executed by a machine, may cause the machine to perform a method and/or operations in accordance with the embodiments. Such a machine may include, for example, any suitable processing platform, computing platform, computing device, processing device, computing system, processing system, computer, processor, or the like, and may be implemented using any suitable combination of hardware and/or software. The computer-readable medium or article may include, for example, any suitable type of memory unit, memory device, memory article, memory medium, storage device, storage article, storage medium and/or storage unit. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

**Claims**

1. A color processing system comprising:

   an image processor configured to color correct a first image sequence based on a second image sequence;
   wherein the image processor determines a first spatio-temporal picture for a first block of the first image sequence and a second spatio-temporal picture for a second block of the second image sequence;
   wherein the first block of the first image sequence corresponds in location, disparity and geometry to the second block of the second image sequence;
   wherein the image processor determines a transform based on color look grabbing of the first spatio-temporal picture and the second spatio-temporal picture; and
   wherein the image processor color corrects the first image sequence by applying the transform to the first block of the first image sequence.

2. A method comprising:

   determining, by an image processor, a first spatio-temporal picture for a first block of the first image sequence and a second spatio-temporal picture for a second block of the second image sequence;
   determining, by the image processor, a transform based on color look grabbing of the first spatio-temporal picture and the second spatio-temporal picture; and
   color correcting, by the image processor, the first image sequence by applying the transform to the first block of the first image sequence;
   wherein the first block of the first image sequence corresponds in location, disparity and geometry to the second block of the second image sequence.

3. The method of claim 2 or the image processor comprised in the system of claim 1 configured for determining whether to determine a first spatio-temporal picture and a second spatio-temporal picture based on the color skew between the first image sequence and the second image sequence.

4. The system of claim 1 or the method of claim 2, wherein the size of the first block and the size of the second block are determined based on a value of a color skew analysis between the first image sequence and the second image sequence.

5. The system of claim 1 or the method of claim 2, wherein the first spatio-temporal picture is built based on a first plurality key frames of the first images sequence and the second spatio-temporal picture is built based on a second plurality of key frames of the second images sequence.

**6.** The system or method of claim 5, wherein the number of key frames is equal to N x M blocks, where N is the amount of blocks in the horizontal direction and M is the amount of blocks in the vertical direction of a frame of the first image sequence.

**7.** The method of claim 2 or the image processor comprised in the system of claim 1 configured for further comprising a blending module for blending the border of a transformed image block that is determined by applying the transform to the first block of the first image sequence.

**8.** The system of claim 1 or the method of claim 2, further comprising determining a first plurality of sub-sequences for the first image sequence and determining a second plurality of sub-sequences for the second image sequence; and performing color correction for a first sub-sequence of the first image sequence based on a second sub-sequence of the second image sequence.

**9.** The system or method of claim 8, further comprising blending between a color corrected first sub-sequence of the first image sequence and a color corrected second sub-sequence of the first image sequence.

**10.** The system of claim 1 or the method of claim 2, wherein the first image sequence corresponds to a left view of 3D image sequence and the second image sequence corresponds to a right view of the 3D image sequence.

**11.** The system or method of claim 10, further comprising determining a disparity map between the first and second image sequences, determining a confidence map based on the disparity map, projecting the first image sequence based on the disparity map to determine a newly projected image sequence, determining a modified newly projected image sequence based on the confidence map, and performing color correction on the modified newly projected image sequence based on the second image sequence, and applying the performed color correction to the first image sequence.

**12.** The system or method of claim 10, wherein the modified newly projected image sequence has pixels blacked out based on the confidence map.

```
┌─────────────────┐     ┌─────────────────┐     ┌─────────────────┐
│                 │     │  Perform Color  │     │  Output Color   │
│  Receive Image  │ ──▶ │  Correction on  │ ──▶ │ Corrected Image │
│       110       │     │ Received Image  │     │       130       │
│                 │     │       120       │     │                 │
└─────────────────┘     └─────────────────┘     └─────────────────┘
```

100        FIGURE 1A (COLOR CORRECTION)

```
┌──────────────────┐     ┌─────────────────┐     ┌─────────────────┐
│ Receive Original │     │                 │     │  Output Color   │
│ Image and Target │ ──▶ │ Determine Color │ ──▶ │Transform for use│
│      Image       │     │    Transform    │     │   in Color      │
│       160        │     │      170        │     │  Correction     │
│                  │     │                 │     │      180        │
└──────────────────┘     └─────────────────┘     └─────────────────┘
```

150        FIGURE 1B (COLOR LOOK GRABBING)

| Receive First Image Sequence 210 | → | Perform Loop No. 1 Loop(1) i = 1, … # of images 230 | ← | Receive Second Image Sequence 220 |

Identify image pair i = ($i_1$, $i_2$) 231

Determine color skew between images in image pair i 240

Define region or block size parameters (N x M) 250

Select Key Frames for Image Pair i 260

Perform Loop No. 2 Loop(2) j=1, … # of blocks in image of image pair i 270

Identify block pair j = ($j_1$, $j_2$) 271

Create spatio-temporal pictures 280

Perform Color Look Grabbing on Spatio-Temporal Picture Pair 290

Apply LUT and optional blending to Block $j_1$ of Image $i_1$ of First Image Sequence 291

End loop(2) 292

End loop(1) 293

200

Figure 2

t = 0     First Image Sequence 201     $T_s$

t = 0     Second Image Sequence 202     $T_s$

FIGURE 2A

FIGURE 2B

FIGURE 2C

```
┌─────────────────────────────────┐
│       Perform Loop No. 3        │
│ Loop(3) k = 1, ... # of Key Frames of │
│          image pair i           │
│              281                │
└─────────────────────────────────┘
                │
                ▼
┌─────────────────────────────────┐
│ Identify key frame block  pair k = (k₁, k₂) │
│              282                │
└─────────────────────────────────┘
                │
                ▼
┌─────────────────────────────────┐
│       Add key frame block       │
│ pair k to spatio-temporal picture pair │
│              283                │
└─────────────────────────────────┘
                │
                ▼
┌─────────────────────────────────┐
│          End loop(3)            │
│              284                │
└─────────────────────────────────┘
```

FIGURE 2D

$$t = \frac{n \times T_s}{(N-1) \times (M-1) - 1}$$

$$n \in \lfloor 0; (N-1) \times (M-1) - 1 \rfloor$$

t = 0

t = N-1

t = 0

t = M-1

204

205

FIGURE 2E

First Spatio-temporal picture

206

Second Spatio-temporal picture

207

Color Look Grabbing

208

LUT of the Given Block

209

FIGURE 2F

FIGURE 3

FIGURE 4

Define Image Sub-Sequence
501

Perform Color Correction on each Sub-Sequence
502

Optional Sub-Sequence Transition
503

FIGURE 5

Sub Sequence 601-a

t = 0

Sub Sequence 601-b

$T_s$

First Image Sequence 601 "zoom in house"

Sub Sequence 602-a

t = 0

Sub Sequence 602-b

$T_s$

Second Image Sequence 602 "zoom in house"

FIGURE 6A

Sub Sequence 602-a

Sub Sequence 602-b

t = 0

$T_s$

Transparency

100%

Spatial Correction blocks according to process 500

Spatial Correction blocks according to process 500

t = 0

Time

Fade in fade out transition 603

Second Image Sequence 802 is corrected using process 500 for each sub-sequence
A fading transition is applied between both sub-sequences

FIGURE 6B

FIGURE 7

Figure 8

Europäisches
Patentamt

European
Patent Office

Office européen
des brevets

## EUROPEAN SEARCH REPORT

Application Number

EP 15 30 5919

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 741 502 A1 (THOMSON LICENSING [FR]) 11 June 2014 (2014-06-11) | 1,2,5-12 | INV. H04N13/00 |
| Y | * paragraph [0019] - paragraph [0025] * | 3 | H04N9/74 |
| A | | 4 | H04N1/60 |
| | ----- | | |
| Y | US 2012/133733 A1 (SAKANIWA HIDENORI [JP] ET AL) 31 May 2012 (2012-05-31) * paragraph [0043] - paragraph [0044] * | 3 | |
| | ----- | | |
| A | WO 2007/050091 A1 (TECHNICOLOR [US]; OLLIVIER PIERRE [US]; ZELL JOACHIM [US]; YEUNG RAYMO) 3 May 2007 (2007-05-03) * page 4, line 22 - page 7, line 6 * | 1,2 | |
| | ----- | | |

TECHNICAL FIELDS
SEARCHED (IPC)

H04N

The present search report has been drawn up for all claims

| Place of search | Date of completion of the search | Examiner |
|---|---|---|
| Munich | 17 December 2015 | Penchev, Petyo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 5919

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2015

| Patent document cited in search report | | | Publication date | Patent family member(s) | | | Publication date |
|---|---|---|---|---|---|---|---|
| EP 2741502 | A1 | | 11-06-2014 | CN | 103871037 | A | 18-06-2014 |
| | | | | EP | 2741502 | A1 | 11-06-2014 |
| | | | | EP | 2741503 | A1 | 11-06-2014 |
| | | | | JP | 2014116012 | A | 26-06-2014 |
| | | | | KR | 20140074238 | A | 17-06-2014 |
| | | | | US | 2014161347 | A1 | 12-06-2014 |
| US 2012133733 | A1 | | 31-05-2012 | CN | 102480625 | A | 30-05-2012 |
| | | | | US | 2012133733 | A1 | 31-05-2012 |
| WO 2007050091 | A1 | | 03-05-2007 | BR | PI0520569 | A2 | 19-05-2009 |
| | | | | CA | 2626385 | A1 | 03-05-2007 |
| | | | | CN | 101313593 | A | 26-11-2008 |
| | | | | EP | 1952640 | A1 | 06-08-2008 |
| | | | | JP | 5230433 | B2 | 10-07-2013 |
| | | | | JP | 2009514338 | A | 02-04-2009 |
| | | | | US | 2009109344 | A1 | 30-04-2009 |
| | | | | WO | 2007050091 | A1 | 03-05-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **ZHANG.** *Adaptive Reconstruction of Intermediate views from Stereoscopic Images*